# EUROPEAN PATENT APPLICATION

(11) **EP 4 528 627 A1**
(43) Date of publication of application: **26.03.2025**
(21) Application number: 22942844.6
(22) Date of filing: 11.10.2022
(51) Int. Cl.: G06Q 50/04, G06Q 50/10, G06Q 10/06, G06Q 10/10, G01D 21/02, G05B 19/418

(54) **METHOD AND SYSTEM USING SENSING SETS FOR QUALITY CONTROL MANAGEMENT SERVICE ALLOWING ANALYSIS AND MONITORING OF PRODUCTION PROCESS FOR INJECTION-MOLDED PRODUCTS**

(30) Priority: 16.05.2022 KR 20220059338
(71) Applicant: Emoldino Inc., Seoul 04637 (KR)
(72) Inventor: LEE, Young-Hwa, Seoul 04969 (KR)
(74) Representative: Spengler, Robert
(86) International application number: PCT/KR2022/015235
(87) International publication number: WO 2023/224180

(57) **Abstract**

The present disclosure provides a method for a service of monitoring and analyzing a manufacturing-producing process, the method measuring mold temperature, the number of shots, a cycle time, and an acceleration signal of the manufacturing-producing process by installing a mold count, a shot count, an IoT sensing set, or an edge sensing set on a mold, and the method providing process information of manufacturing and producing to an online platform without limitation in the position of a mold and the position and distance of a manager by storing and analyzing measured data in a server/cloud server in real time, and a system for providing the service.

## Description

### [Technical Field]

The present disclosure relates to a method for a service of monitoring and analyzing a manufacturing-producing process, the method measuring mold temperature, the number of shots, a cycle time, and an acceleration signal of the manufacturing-producing process by installing a mold counter, a shot counter, an IoT sensing set, or an edge sensing set on a mold, and the method providing process information of manufacturing and producing to an online App platform without limitation in the position of a mold and/or the position and distance of a manager by storing and analyzing measured data in a server/cloud server in real time, and a system for providing the service.

### [Background Art]

Recently, business models of the manufacturing industry that were configured and operated in the unit of small-size area in the past have been developed into a global business chain in the unit of large area such as country to country with construction of a global network and globalization of relevant markets.

Accordingly, the relationship between an OEM that is the subject of production and a supplier that is an executor of production have changed into a global relationship from a small-size local relationship, and accordingly, it is limitative to manage a manufacturing chain through the conventional production management method of a spreadsheet type that were managed by recording and input by workers.

The method in which workers manually and periodically check and share processes and the current production state in the related art is not appropriate in terms of time to manage a value chain of concept expanded in scale and cannot systematically in terms of system, so there is a case in which it is difficult to take a timely measure when a problem or an abnormal situation is generated.

Manual production management by workers in the value chain of OEM accompanies uncertainty called a human factor, so instability of data started to be generated and deterioration of mutual data reliability is caused, whereby there is a problem that efficient production management is not made.

The present disclosure provides injection-molded product quality management method and system that include a mold counter, and a magnetic sensor, a temperature sensor, and a vibration sensor for quality management and increase accuracy and reliability by managing the quality of molded products through double or triple steps, and provide process information of manufacturing and producing in real time to a high-speed online App platform regardless of the position and distance of a mold and a manager.

### [Disclosure]

### [Technical Problem]

In order to achieve the objectives described above, an objective of the present disclosure is to provide an injection-molded product quality management service method that measures temperature of a mold, the number of shots, a cycle time, and a vibration signal of a manufacturing-producing process by installing a mold counter, a shot counter, an IoT sensing set, an edge sensing set, or the like on the mold; arranges measured signals into data in accordance with a predetermined procedure through a control algorithm mounted on a controlling PCB disposed in a sensor module, transmits the data to a transmission/reception terminal through Bluetooth, thereby transmitting and storing the data to a server/cloud server in real time through internet WiFi; and then provides desired services to individuals and/or companies by analyzing the quality of products using a statistical algorithm and/or an AI/ML algorithm mounted on the server on the basis of the stored data.

Another objective of the present disclosure is to provide an injection-molded product quality management service that includes: determining a normal product when temperature data of a mold of stored data is in a normal production period and a stable pattern that is a set temperature range by receiving signals measured by a sensor disposed in a sensor module installed on the mold, storing the measured signal in a memory or a database of a management server, a server, or a cloud server, and analyzing the temperature data of the mold; and determining an abnormal product and displaying a display or notification message on a screen when the temperature of the mold changes and departs from the stable pattern that is the set temperature range.

Another objective of the present disclosure is to provide an injection-molded product quality management service that includes displaying or showing at least an injection-molded product departing from at least one or more set ranges as a poor product on the screen of a monitor liked with a server by analyzing vibration signal data of a mold of data stored in the server, that is, analyzing at least one or more of a generation interval and an amplitude magnitude of vibration signals that are generated at start of injection, start of packing, and end of packing.

Another objective of the present disclosure is to provide an injection-molded product quality management service that includes: displaying or showing an overall production amount and an injected product departing from a set range as a poor product on a monitor by analyzing vibration signal data of a mold of data stored in a server, that is, analyzing a generation interval of vibration signals that are generated in mold-opening and mold-closing.

Another objective of the present disclosure is to provide an injection-molded product quality management service that mounts a statistical algorithm and an AI/ML algorithm on a management server, a server, or a cloud server and analyzes the quality of molded products on the basis of data stored in the server, thereby displaying or showing a result, which is obtained from at least one of a mold ID, each molded product, a hall sensor, a temperature sensor, and an acceleration sensor to an individual or a company.

### [Technical Solution]

An objective of the present disclosure is to provide an injection-molded product quality management service method including: downloading a predetermined program provided from an App to connecting with a server and receiving a service; clicking an information input button provided by the App and then inputting and storing information for receiving a service, which includes a mold, a product, and a company name linked with a plurality of sensing sets installed on a corresponding mold, in a memory or a database; transmitting signals measured by a plurality of input and stored sensing sets to a controlling PCB disposed in a sensor module; preprocessing data through an algorithm mounted on the controlling PCB; and transmitting the preprocessed data to a transmission/reception terminal in which the transmitted data is stored in a server through communication including internet WiFi.

Another objective of the present disclosure is to provide an injection-molded product quality management service method that includes mounting a firmware program for operating an MCU and a sensing set on the controlling PCB disposed in the sensor module, of editing data measured by a sensor of the measuring PCB into one time-series data array through the firmware algorithm to increase the processing speed of the data and reduce the storage capacity, and transmitting and receiving the data from the controlling PCB to the transmission/reception terminal through wireless communication including Bluetooth.

Another objective of the present disclosure is to provide an injection-molded product quality management service method that includes: storing the data transmitted to the transmission/reception terminal from the controller of the sensing module into the memory or the database of the server; determining a normal product when data of stored temperature data is in a normal production period and a stable pattern that is a set temperature range; and determining an abnormal product and displaying a whole production amount or a notification message in an image of a monitor when the temperature of the mold changes and departs from the stable pattern that is a set temperature range.

Another objective of the present disclosure is to provide an injection-molded product quality management service method that includes: recording and storing data measured from the sensor module into the server through the transmission/reception terminal; and mounting a statistical algorithm and an AI/ML algorithm, analyzing the quality of molded products on the basis of the data stored in the server and showing various analysis images on the basis of at least one or more piece of information of a mold ID, a part ID, a sensing set ID, each molded product, a hall sensor, a temperature sensor, and an acceleration sensor so that an individual or a company can mange products that are produced by the mold.

Another objective of the present disclosure is to provide an injection-molded product quality management service method that includes: measuring a vibration signal measured by an acceleration sensor as time-series data by means of a measuring PCB; extracting and putting only peak values for production information analysis into a data array for the measured data by applying a corresponding algorithm in an MCU disposed in the controlling PCB and a memory equipped with a control algorithm; transmitting the arrayed data to the transmission/reception terminal through Bluetooth communication of the controlling PCB and storing the arrayed data into at least one of a management server, a server, and a cloud server; and displaying molded products departing from a set range as poor products or showing a guide in an image by analyzing a generation interval of vibration signals that are generated in mold-opening and mold-closing on the basis of the data stored in the sever in order to manage products.

Another objective of the present disclosure is to provide an injection-molded product quality management service method that includes: measuring a vibration signal measured by an acceleration sensor as time-series data by means of a measuring PCB; extracting and putting only peak values for production information analysis into a data array for the measured data by applying a corresponding algorithm in an MCU disposed in the controlling PCB and a memory equipped with a control algorithm; transmitting the arrayed data to the transmission/reception terminal through Bluetooth communication of the controlling PCB and storing the arrayed data into at least one of a management server, a server, and a cloud server; and displaying molded products departing from at least one or more set ranges as poor products or showing a guide in an image by analyzing at least one or more of a generation interval and an amplitude magnitude of vibration signals, which are generated at start of injection, start of packing, and end of packing, on the basis of the data stored in the sever.

Another objective of the present disclosure is to provide an injection-molded product quality management service method that includes showing distribution ratios of a normal production period, a warm-up period, a cool-down period, and an abnormal production period in product production and an improvement ratio of current production efficiency to the past for molds of a corresponding company that is provided with a service to efficiently perform production management by comparing the current production efficiency with the past.

Another objective of the present disclosure is to provide an injection-molded product quality management service method that includes showing use amount analysis for each of molds of a corresponding company, performing analysis on the basis of days on which a target production amount was satisfied and was not satisfied and days on which a corresponding mold was not operated, and displaying an entire production ratio; and providing an image in which a graph at the right side of the image shows a use time bar graph for production in analysis of each of the molds, green shows time for which products were actually produced using a mold, and yellow shows time for which additional production of products was possible other than the actual product production time.

Another objective of the present disclosure is to implement an injection-molded product quality management service system including: a sensing set that has, therein, a controlling PCB having a magnet unit, a hall sensor, a liquid crystal display, and MCU, and a memory and equipped with a control program, and a measuring PCB having a temperature sensor and an acceleration sensor fixedly installed thereon and measuring a signal generated by a mold; a transmission/reception terminal that receives data measured by the sensing set and transmitted through Bluetooth communication installed on the controlling PCB of the sensor module; and a server or a cloud server that stores data received from the transmission/reception terminal and analyzes, determines, and displays molded products as good product produced through a normal process or as poor products, etc. produced through an abnormal process in an image on the basis of the stored data using a mathematical statistic tool/algorithm and/or an AI/ML algorithm mounted on the server or the cloud server.

Another objective of the present disclosure is to implement an injection-molded product quality management service system, in which, in order to obtain accurate and reliable data from a sensor disposed in the sensor module, the controlling PCB on which the hall sensor is fixedly installed in consideration of the position of a magnet is fixedly installed at an upper portion in a sensor module case, the temperature sensor measuring temperature and the acceleration sensor measuring a vibration signal are fixedly installed on the measuring PCB and fixedly installed on a sensor module bottom case, and the sensor module bottom case is fixedly installed on a mold surface.

### [Advantageous Effects]

The present disclosure has an improve effect of measuring a signal by installing a sensing set on a mold, of arranging measured signals into data in accordance with a predetermined procedure through a control algorithm mounted on a controlling PCB disposed in a sensor module and of transmitting the data to a transmission/reception terminal through Bluetooth, and then of transmitting and storing the data to a server/cloud server in real time through internet WiFi, of analyzing the quality of products using a mounted statistical algorithm and/or AI/ML algorithm on the basis of the stored data, thereby being able to provide desired services to individuals and/or companies.

The present disclosure has an advantageous effect of mounting a statistical algorithm and/or an AI/ML algorithm on a server or a cloud server, of analyzing the quality of molded products on the basis of data stored in the server, of evaluating the quality of molded products that are produced by analyzing data relating to any one or more of a mold ID, a sensing set ID, each molded product, a hall sensor, a temperature sensor, and an acceleration sensor, and of displaying the quality in an image so that an individual or a company can monitor and manage the quality in real time.

The present disclosure has another improved effect of downloading a predetermined program provided by an App platform, of joining as a member in accordance with a predetermined procedure provided by the program, of receiving a unique ID for using a service in joining, and of accessing an injection-molded product quality management service App provided by the present disclosure using the given unique ID, thereby being able to monitor the production amount of a corresponding product and whether production is normally performed through various monitoring images in real time.

The present disclosure has another advantageous effect that individuals or companies registering information on a server can be easily provided with a quality management service by including a step of performing registration by clicking an information input button provided by an App and then inputting information for receiving the service such as a mold, a product, and a company linked with a sensing set ID installed on a corresponding mold ID.

### [Description of Drawings]

FIGS. 1 and 2 are images for inputting information (a mold, a part, a company, etc.) linked with a sensing set on an App platform.
FIG. 3 shows one embodiment of a sensing set composed of a sensor module and a magnet unit.
FIG. 4 is an exploded view showing the internal structure of the sensor module 100 of FIG. 3.
FIG. 5 is an exploded view of the magnet unit 200 of FIG. 3.
FIG. 6 is a vertical cross-sectional view showing the state in which a sensing set is mounted on the surface of a mold 300.
FIG. 7 is a picture in which a magnet unit and a sensor module of a sensing set are fixed by bolts to a moving side and a fixed side of a mold.
FIG. 8 is a view showing one embodiment in which a transmission/reception terminal is installed at a manufacturing-producing site.
FIG. 9 is a flowchart showing that a plurality of sensing sets and a data transmission/reception terminal are connected and interact with each other at a manufacturing-producing site.
FIG. 10 is a view illustrating a type in which data collected from a sensing set is stored in a data array through an MCU.
FIG. 11 is a schematic view showing the case in which mold temperature is changed in a production period.
FIG. 12 is a view showing a vibration signal of a mold measured by an acceleration sensor disposed in a sensor module.
FIG. 13 is a view showing different process steps in accordance with a recording point in time of vibration signal data in which an amplitude magnitude value of a vibration signal measured by an acceleration sensor shows the characteristic of each producing process step.
FIG. 14 schematically shows that a plurality of data transmission/reception terminals is connected and interacts with a management server, server, or cloud server system.
FIG. 15 shows one example of a dashboard that is provided to companies that receive an injection-molded product quality management service through an App platform of the present disclosure.
FIG. 16 shows a function of analyzing and displaying a cycle time of data, which is collected through a sensor module and stored in a server, on an App platform.
FIG. 17 shows a view in which L1 and L2 are analyzed using a cycle time reference value set by a user in cycle time analysis.
FIG. 18 shows measured temperature data, shows maximum and minimum temperature using error bars, visually shows deviations, and displays an average temperature value.
FIG. 19 shows entire temperature data measured in a specific time range when a temperature value of the specific time range is clicked in FIG. 18.
FIG. 20 shows a current use state of all of molds that a corresponding company has.
FIG. 21 shows bar graphs showing four weeks from April 1 to April 28 in the unit of week.
FIG. 22 shows normal production with green, warm-up with yellow, and cool-down with gray.
FIG. 23 shows bar graphs showing four weeks from April 1 to April 28 in the unit of week.
FIG. 24 is a flowchart of a process in which collected data and analysis information are displayed on an App platform from data collection using a sensing set.

### [Best Mode]

The best mode for implementing the present disclosure is to provide an injection-molded product quality management service method including: a step of downloading a predetermined program provided from an App to connecting with a server and receiving a service; a step of clicking an information input button provided by the App and then inputting and storing information for receiving a service, which includes a mold, a product, and a company name linked with a plurality of sensing sets installed on a corresponding mold, in a memory or a database; a step of transmitting signals measured by a plurality of input and stored sensing sets to a controlling PCB disposed in a sensor module; a step of preprocessing data through an algorithm mounted on the controlling PCB; and a step of transmitting the preprocessed data to a transmission/reception terminal in which the transmitted data is transmitted and stored in a server through communication including internet WiFi.

### [Mode for Invention]

Details for implementing the present disclosure are described.

According to the present disclosure, a sensing set (a mold counter, a shot counter, an IoT sensing set, an edge sensing set, or the like) that can measure at least one or more of temperature of a mold, a process time, and a vibration signal in manufacturing and producing is fixedly installed on a mold.

A signal measured by the sensing set is converted into a data in accordance with a predetermined procedure through a control algorithm mounted on a sensor module and the data is transmitted and received to a transmission/reception terminal installed in a manufacturing-producing environment through wireless communication including Bluetooth communication installed at a side of the sensor module.

The present disclosure provides injection-molded product quality management service method and system that can analyze and monitor a molded product production process remotely using a sensing set while transmitting and storing data transmitted to the transmission/reception terminal in real time in a management server, a server, or a cloud server through common internet WiFi.

A detailed embodiment of the present disclosure is described.

### <Embodiment>

A detailed embodiment according to the present disclosure is described on the basis of drawings.

An injection-molded product quality management service method that can analyze and monitor a molded product production process according to the present disclosure can be applied to all of the fields of manufacturing industry using a mold as a production subject such as injection molding and press forming and can provide a service to people and/or companies that want to receive a service through an App platform.

In order to receive a service according to the present disclosure, the present disclosure includes a step of downloading a predetermined program provided by an App platform provided by a server of the present disclosure and joining as a member in accordance with a predetermined procedure provided by the program.

The present disclosure may include a step of receiving a unique ID for using the service in joining and being able to check the production amount of a corresponding product of a corresponding company and whether production is normally performed on a monitor through various services by accessing an injection-molded product quality management service App provided by the present disclosure using the given unique ID.

The present disclosure includes a step of clicking an information input button provided by the App to receive the service after joining as a member for receiving the service according to the present disclosure and then inputting information such as a mold ID, a product, parts, a company, etc. linked with a sensing set ID installed on a corresponding mold.

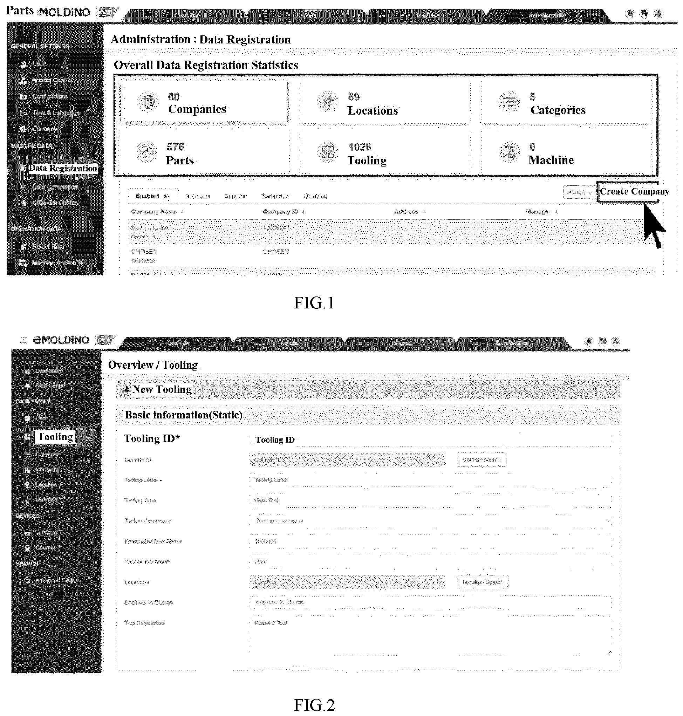

The step of inputting information for receiving the service may include, as in FIGS. 1 and 2, a step in which a user accesses in person the App platform and inputs the information of a mold to be linked or files the information in a document type such that the information is stored and registered by a manager of the App platform.

As can be seen from FIGS. 1 and 2, since there are a great number of molds, parts, products, and companies that receive the service of the present disclosure, unique IDs are given to be able to recognize them.

That is, the method includes a step of obtaining data by recognizing shot cycles of products produced through all of molds that produce molded products, temperature of the molds, vibration signals of the molds such as a mold ID, the unique ID of a sensing set attached to a mold, a transmission/reception terminal ID, and a company ID, and of storing the obtained data in a memory and/or a database of a management server, a server, a cloud server, or the like.

It is possible to provide desired service to individuals and/or companies by analyzing the data stored in the memory and/or the database using a statistical algorithm and/or an Artificial Intelligence (AI)/ Machine Learning (ML) algorithm developed in the present disclosure and mounted on the management server, a server, a cloud server, or the like.

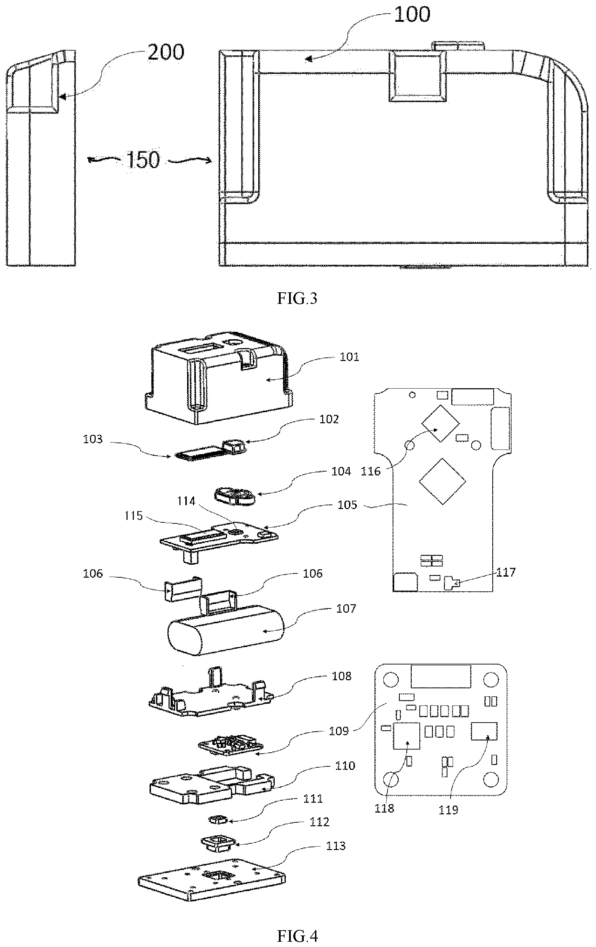

As in FIG. 3, a 'sensing module' in the specification of the present disclosure is composed of a 'magnet unit' and a 'sensor module' and the sensor module accommodates a hall sensor, a temperature sensor, an acceleration sensor, a battery, a measuring PCB, a controlling PCB, etc.

The term 'App platform' used in the specification of the present disclosure is a term combining 'application' and 'platform', an App has the same meaning as common Apps and an application program provided in the present disclosure, and the platform means an 'internet environment' in which an App is provided.

Accordingly, 'App' and 'App platform' are both used in the specification and they can be understood as the same meaning.

FIG. 3 shows a sensing set for obtaining manufacturing-producing information by being mounted on a mold, and the sensing set (150 in FIG. 3) is composed of a sensor module (100 in FIG. 3) and a magnet unit (200 in FIG. 3).

FIG. 4 is an exploded view showing the internal structure of the sensor module (100 in FIG. 3) of the sensing set (150 in FIG. 3) of FIG. 3.

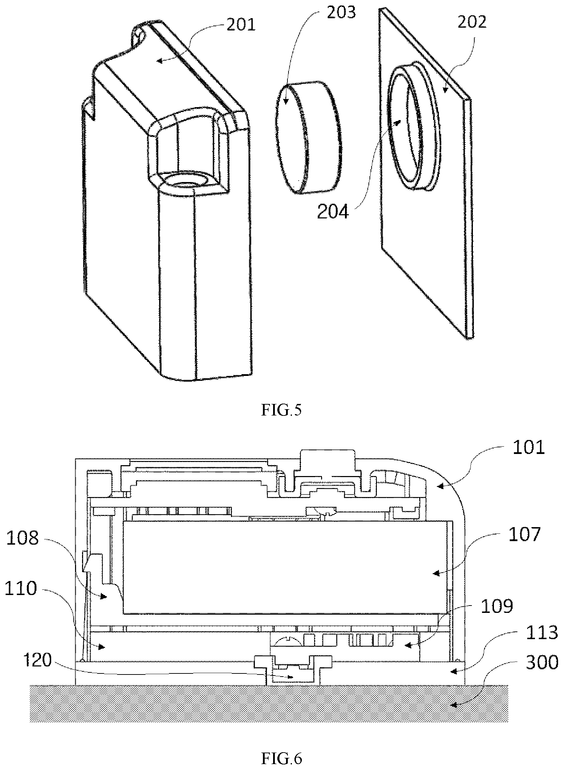

FIG. 5 is an exploded view of the magnet unit 200 of FIG. 3.

The magnet unit is composed of a magnet body (201 in FIG. 5), a magnet unit cover (202 in FIG. 5), and a magnet (203 in FIG. 5), and it is preferable that the magnet is made of neodymium of which the intensity of magnetism is strong.

In FIG. 5, it is preferable to assemble and manufacture the magnet unit by coupling the magnet to the magnet unit body (201 in FIG. 5) by inserting the magnet into a magnet accommodation groove (204 in FIG. 5) formed at a middle upper portion of the magnet unit cover (202 in FIG. 5), and it is preferable to dispose the magnet close to the hall sensor (117 in FIG. 4), which is fixedly installed in the sensor module, in consideration of the position of the magnet.

That is, since the intensity of the magnetism of the magnet decreases in inverse proportion to the cube of a distance and the magnetic flux density decreases at high temperature, it is preferable to fix and install the magnet at a predetermined distance from a mold surface in consideration of this fact when designing and manufacturing the magnet unit (200 in FIG. 1).

The magnet unit is fixedly installed at a moving side with a predetermined distance from the sensor module installed at a fixed side and is configured to count the number of times of mold-opening.

Referring to FIG. 4, a counter unit of a sensing set is shown as 000 that is a default, sensors installed on a measuring PCB 108 measure temperature and a vibration signal, and a controlling PCB analyzes information collected from the sensors and preprocesses the information such that data measured in time series to be transmitted to a data transmission/reception terminal is arrayed.

FIG. 5 is the magnet unit 200 of a sensing set, in which as the magnet unit is moved toward and away from the sensor module 100 in accordance of opening and closing operations of a mold, a hall sensor disposed in the sensor module is operated to be able to obtain production information (the number of shots, a cycle time).

FIG. 6 shows that a sensing set configured to be liked with necessary information such as a mold, a product, and a company is fixedly installed on a mold. The sensing set is fixedly installed on the surface of a mold supposed to perform production of products or at a position machined on a mold in advance.

The sensor module and the magnet unit of the sensing set re configured to operate with each other in linkage with the opening and closing operations of a mold.

As in FIG. 6, it is preferable that the controlling PCB (105 in FIG. 4) on which the hall sensor installed in consideration of the magnet, an operation button (102 in FIG. 4), and a liquid crystal display (115 in FIG. 4) are fixedly installed is fixedly installed at an upper portion in a sensor module case, and a temperature sensor (119 in FIG. 4) measuring temperature and/or an acceleration sensor (118 in FIG. 4) measuring a vibration signal are fixedly installed on the measuring PCB (109 in FIG. 4) and fixedly installed in close contact with a sensor module bottom case (113 in FIG. 4).

Since the sensor module bottom case (113 in FIG. 4) is made of a material that has thermal conductivity similar to or the same as the mold, it is possible to receive heat from the mold with a minimized loss of heat and detect temperature similar to or the same as the mold in measuring.

A battery (107 in FIG. 2) disposed in the sensor module is fixedly installed on a battery-fixing member (108 in FIG. 2) installed under the battery and a silicon member for fixing the battery is further installed over the battery such that the battery is not separated from the battery-fixing member.

An insulating plate (110 in FIG. 2) installed to prevent a use temperature limit of the battery from being exceeded by minimizing heat transferring to the battery is positioned under the battery-fixing member (108 in FIG. 2), and an insertion space is formed at the right side of the insulating plate (110 in FIG. 2) such that the measuring PCB (109 in FIG. 2) can be directly fastened and fixed to the sensor module bottom case (113 in FIG. 2).

In FIG. 6, a button (120 in FIG. 6) for checking installation of the sensor module is installed at a side of the sensor module bottom case toward the mold surface to show that the sensor module is installed on the mold surface.

The button (120 in FIG. 6) for checking installation of the sensor module serves to generate and transmit a signal from the controller to the transmission/reception terminal through Bluetooth communication when the sensor module is separated from the mold surface such that a manager can always check it through the screen of a server or a terminal through various wireless communication means including high-speed internet WiFi.

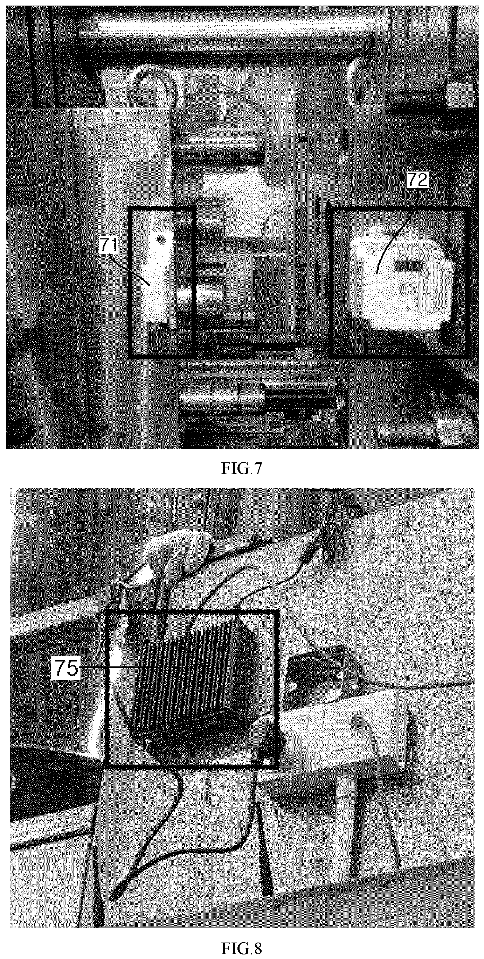

FIG. 7 is a picture in which a magnet unit and a sensor module of a sensing set are fixed by bolts to a moving side and a fixed side of a mold.

In FIG. 7, a magnet unit (71 in FIG. 7) is fixedly installed at a moving side of a mold and a sensor module (72 in FIG. 7) is fixedly installed by bolts at a fixed side close to the magnet unit.

FIG. 8 shows that a data transmission/reception terminal liked with a company ID, a sensing set ID, etc. is installed in a manufacturing-producing site similar to a sensing set, and the present disclosure includes a step of fixedly installing a plurality of sensing sets and a data transmission/reception terminal at a distance at which they can transmit and receive data to and from each other in a production site through Bluetooth communication.

In FIG. 8, the rectangle indicated with red in the figure shows a transmission/reception terminal that can transmit and receive data.

The transmission/reception terminal is configured to function as an intermediate medium that collects data from the plurality of sensing sets, transmits the data to a server, and transmits instructions from the server to a sensor module.

It is preferable that the plurality of sensing sets uses Bluetooth communication to be able to transmit and receive data with minimum power consumption and the transmission/reception terminal is configured to transmit and receive data to and from the sensor modules through Bluetooth wireless communication.

The transmission/reception terminal can also serve to capture data before inserting additional information to information received from the sensor module and transmitting the information to the server.

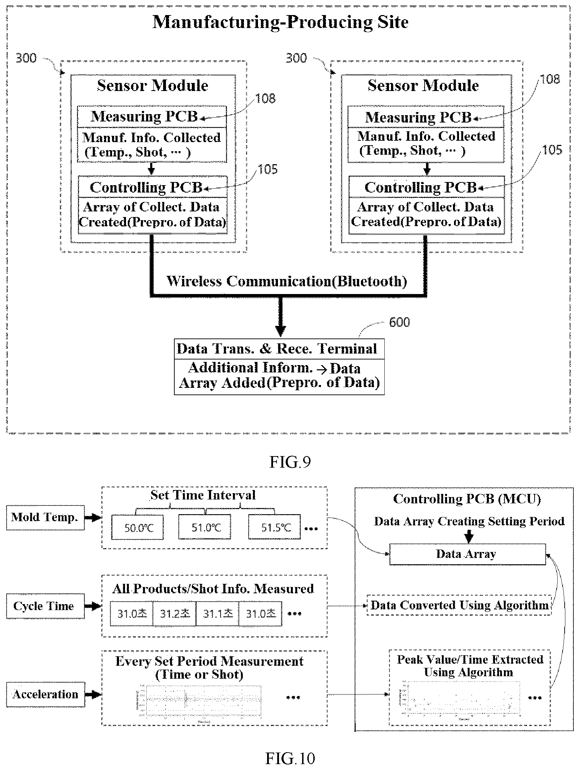

FIG. 9 shows that a plurality of sensing sets and a transmission/reception terminal are connected and interact with each other at a manufacturing-producing site. Since each of the sensing sets has an MCU being in charge of control operating process and mounted on the sensor module 100, the present disclosure includes a step of performing preprocessing that arrays data in time series before transmitting the data to a data transmission/reception terminal by analyzing information measured by the sensor module 100.

A part and/or a device employing two or more such as a sensing set, a transmission/reception terminal, and a server described in the specification of the present disclosure is given a unique ID for recognition, and the given unique ID is stored in a memory and/or a database and used for analyzing and monitoring.

In more detail, an MCU and a firmware program for operating the sensing set are mounted on the controlling PCB (105 in FIG. 4) shown in FIG. 4, and the present disclosure includes a step of making data collected by the measuring PCB (109 in FIG. 4) into one data array through the firmware algorithm and of transmitting the data to a transmission/reception terminal from the controlling PCB (105 in FIG. 4) through near field communication such as Bluetooth.

That is, the present disclosure includes a step of configuring signals, which are measured by a hall sensor, a temperature sensor, and an acceleration sensor in a sensor module, into one data array in time series in accordance with a time cycle set in the firmware program mounted on the controlling PCB in the sensor module.

For example, the present disclosure includes a step of preprocessing production information data measured by a sensor module for 1 hour into one data array when a time cycle for creating a data array is set as 1 hour in a firmware program mounted on the memory of the sensor module.

The time cycle may be changed and set as several seconds, several minutes, tens of minutes, several hours, or the like in consideration of a data processing speed, the number of devices supposed to be accommodated in a server, a data storage capacity, etc.

The present disclosure includes a step of transmitting data arrays processed and configured in the sensor module to the data transmission/reception terminal.

FIG. 10 is a view illustrating a type in which temperature data collected from a sensing set is stored in a data array through an MCU. The sensing set measures the temperature of a mold in accordance with a cycle set in a firmware program. For example, when the cycle set in the firmware program is 10 minutes, the temperature of a mold is measured and collected at every 10 minutes.

The cycle set in the firmware program described in the specification of the present disclosure may be changed in various ways in consideration of the number of sensor modules, the number of transmission/reception terminal, the number of service target companies, a data storage capacity, a processing speed of a data amount, etc.

In FIG. 10, data is processed in accordance with a predetermined procedure in the controlling PCB for mold temperature, a cycle time, and a vibration signal measured by an acceleration sensor, is transmitted to a data transmission/reception terminal through wireless communication, and is transmitted and stored in a management server, a server, or a cloud server in real time throughout the whole world through common internet WiFi.

The management server, the server, or the cloud server described in the specification of the present disclosure means a server that provides an injection-molded product quality management service that can analyze and monitor a molded product production process, and can provide various services to be described below.

Technical configuration and method of measuring the signals shown in FIG. 10 are described.

The present disclosure includes a step of collecting information about all molded product production by sensing the operation of opening and closing of a mold for the number of shots and a cycle time by means of a magnet unit installed at a moving side and hall sensor on a controlling PCB installed at a fixed side in linkage with each other.

Since information about all molded product production is collected, a great amount of data is collected for a cycle time.

Next, temperature data measured by a temperature sensor disposed in a measuring PCB of a plurality of sensor modules is described.

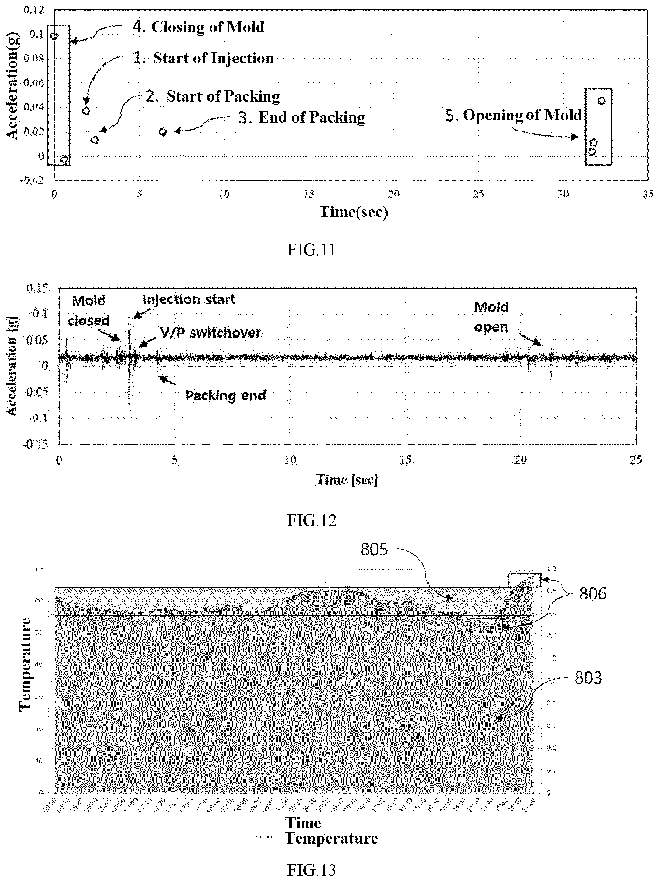

FIG. 11 is a schematic view showing the case in which mold temperature is changed in a production period 803.

In FIG. 11, a normal production period (803 in FIG. 8) is the lower light green part (803), a set temperature range is a stable pattern (805 in FIG. 10), and a case in which the temperature of a mold changes and departs from a set normal temperature occurs (806 in FIG. 8).

In this case, deviations are analyzed through a reference of temperature data classified as the stable pattern (805 in FIG. 8) of FIG. 11, and a deviation departs from a set range, products are classified as products produced at abnormal temperature, are determined as poor products or products with a possibility of a problem, and are excluded from the quantity of good products.

FIG. 12 is a view showing a vibration signal of a mold measured by an acceleration sensor disposed in a sensor module.

A sensor that measures vibration of a mold may be an acceleration sensor or a vibration sensor and can measure a mold-opening signal, a mold-closing signal, and a vibration signal that is generated when resin is injected into a mold.

The amplitude magnitude value of a vibration signal measured by an acceleration sensor recorded in FIG. 13 shows the characteristic of each producing process step and shows different process steps in accordance with a recording point in time of data.

No. 4 and No. 5 in FIG. 13 show vibration signals measured due to operation of opening and closing of a mold, in which No. 4 of FIG. 13 shows the amplitude magnitude (peak value) of a vibration signal generated when a mold is closed (mold-closing) and No. 5 of FIG. 13 shows the amplitude magnitude (peak value) of a vibration signal generated when a mold is opened (mold-opening).

That is, the present disclosure includes a step of collecting data at a cycle set in a firmware program by measuring a peak value of a vibration signal that is generated when a mold is opened or closed by means of an acceleration sensor disposed in a sensor module, and of arraying the data into a time-series data through an MCU and transmitting the data to a data transmission/reception terminal through Bluetooth communication.

In FIG. 13, the magnitude of the signal at the point in time of start of injection of No. 1 is changed in accordance with an injection speed set in the process, and as the injection speed is increased, the force for driving the molding machine and the shock that is generated when a material is injected into a mold are increased, so the amplitude magnitude of a vibration signal is increased.

In FIG. 13, the signal at the point in time of start of packing or switch of packing of No. 2 depends on the difference between the magnitudes of injection pressure and packing pressure, and the larger the difference of the magnitudes, the larger the amplitude magnitude of a vibration signal.

The point in time of start of packing or switch of packing is a process of forcibly controlling pressure from injection pressure to packing pressure, and the larger the pressure difference, the larger the amplitude magnitude of a vibration signal.

In FIG. 13, the signal at the point in time of end of packing or start of cooling of No. 3 depends on the difference between the magnitude of packing pressure and the magnitude of back pressure, and the larger the difference of the magnitudes of pressure, the larger the amplitude magnitude of a vibration signal.

When raw data measured by a sensor in a sensor module is stored in a memory as it is, it is slightly inefficient in terms of transmission.

Accordingly, since data is easily stored in a memory and is excellent in terms of transmission efficiency, the present disclosure includes a step of configuring product production cycle times in a set cycle to be able to be included in data (256 bytes) of 1 packet by arraying them in order of time by applying an operating algorithm of a control program mounted on a controlling PCB.

The present disclosure may include a step of measuring and collecting a vibration signal, which is measured by an acceleration sensor (118 in FIG. 4), as a time-series signal by means of a measuring PCB (109 in FIG. 4), and of extracting and arraying only peak values for production information analysis into time-series data by applying a corresponding algorithm by means of a controlling PCB having an MCU and a memory equipped with a control algorithm.

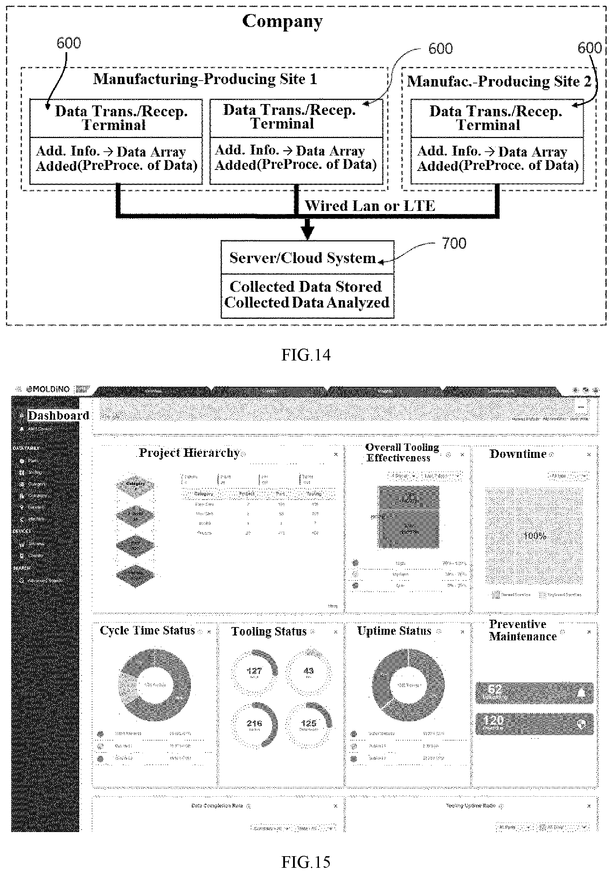

FIG. 14 shows that a plurality of data transmission/reception terminals is connected and interacts with a management server, server, or cloud server system.

There is also a case in which a plurality of data transmission/reception terminals is installed even in a same manufacturing-producing site, depending on a transmission/reception distance and/or a data processing capacity, and there is also a case in which a transmission/reception terminal is installed at each of different manufacturing-producing sites.

A data transmission/reception terminal and a management server, server, or cloud server system can transmit and receive data to and from each other only when they are linked with same company information.

The present disclosure includes a step in which a data transmission/reception terminal adds unique ID (information), which the data transmission/reception terminal has, to a data array of manufacturing-producing information transmitted and collected from a sensing set.

The present disclosure may include a step of giving unique IDs to be able to recognize the sensing set and the data transmission/reception terminal, of transmitting data to a management server, server, or cloud server system, and of performing communication through a wired LAN or LTE USIM.

The present disclosure includes a step of classifying data to be stored in the management server, server, or cloud server system into two types in a broad meaning, and of storing data measured by the sensor module without processing, and/or a step of reprocessing and storing collected information, if necessary.

The present disclosure includes a step in which the management server, server, or cloud server system records and stores data transmitted from the data transmission/reception terminal into a memory and/or a database of a corresponding server.

FIG. 15 shows one example of a dashboard that is provided to companies that receive an injection-molded product quality management service through an App platform of the present disclosure.

The dashboard of FIG. 15 is for displaying abstract information about a process state of a corresponding company.

FIG. 15 shows one exemplary dashboard and the design of the dashboard may be different because the types that companies want are slightly different when the injection-molded product quality management service of the present disclosure is provided.

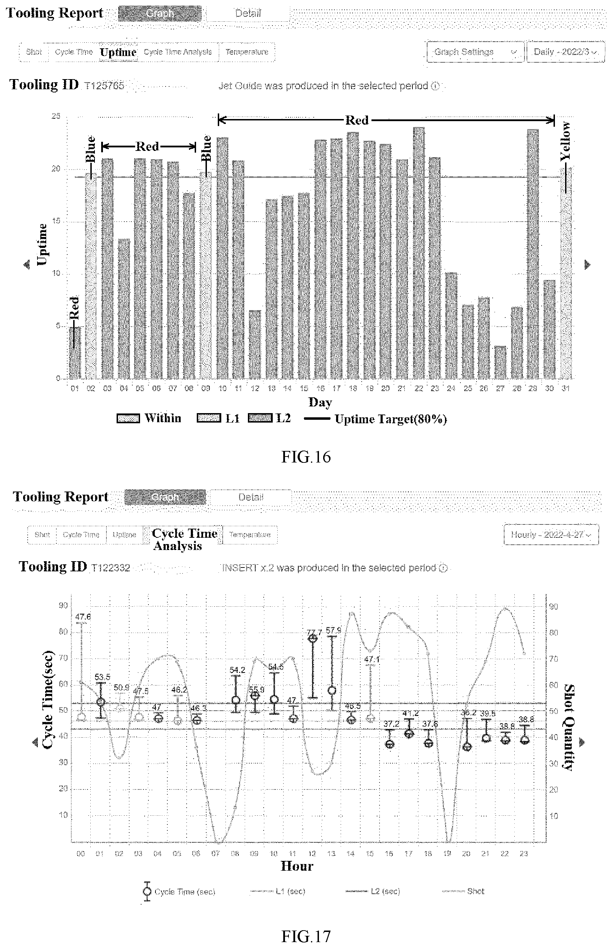

FIG. 16 shows an image provided by an App platform by analyzing a cycle time of data collected through a sensor module and stored in a management server, server, or cloud server system through a data transmission/reception terminal.

In FIG. 16, collected cycle time are shown in a bar graph type and green means that a recorded cycle time is stable.

In FIG. 16, a yellow bar shows the state in which it departs from a range L1 set by a user (usually set as 3% of a reference value).

In FIG. 16, a red bar shows the state in which it departs from a range L2 set by a user (usually set as 5% of a reference value).

As a reference value that is used for stable analysis of a mold injection cycle time, an approved cycle time input by a user is used, but it may be changed and applied as a weighted average cycle time (CT) extracted on the basis of past data.

In the curve graph, green shows that a weighted average cycle time that is a reference cycle time recommended on the basis of past data described above.

In the curve graph, yellow shows a maximum cycle time of all of cycle times recorded in time ranges (bar charts), respectively, and red shows a recorded minimum cycle time.

An uptime shows a production time calculated by multiplying the number of shots by a cycle time.

An uptime target value is used as a reference value in uptime analysis, shows an available process time at a production site, and is an item that is input by a user.

The yellow bar shows the state in which it departs from a range L1 set by a user (usually set as 3% of a reference value).

The red bar shows the state in which it departs from a range L2 set by a user (usually set as 5% of a reference value).

The blue bar means that an uptime is similar to an available process time at a production site.

The values of 3% and 5% described above are values set by a user on the basis of existing data analysis and may be changed.

In FIG. 17, L1 and L2 show a cycle time range set by a user in cycle time analysis, that is, an analysis range in which an approved cycle time input by a user or a weighted approved cycle time based on past data is used as a reference value.

Further, maximum and minimum cycle times are shown and deviations are visually shown using error bars, and a most frequency cycle time value is shown by a number.

Another embodiment of the present disclosure may include a step of displaying a part ID that is produced by a corresponding company of a plurality of service target companies or individuals, the name of the part, a current production state, etc. in an image.

Another embodiment of the present disclosure may include a step of displaying an image through which it is possible to check production information of a corresponding part when the part ID is clicked.

Another embodiment of the present disclosure may include a step of displaying a mold ID that produces a plurality of parts of a corresponding company of a plurality of service target companies or individuals, a current production state of the mold, etc. in an image.

Another embodiment of the present disclosure may include a step of displaying a mold ID on a monitor through which it is possible to check the production information of a corresponding part that is produced by the mold when the mold ID is clicked.

Another embodiment of the present disclosure may include a step in which a report image about a mold is configured such that it is possible to check an analysis report about the number of shots, a cycle time, an uptime, a vibration signal, and temperature in an image, and an image through which it is possible to search for and check all of data for each month, each week, each day, and each time is displayed.

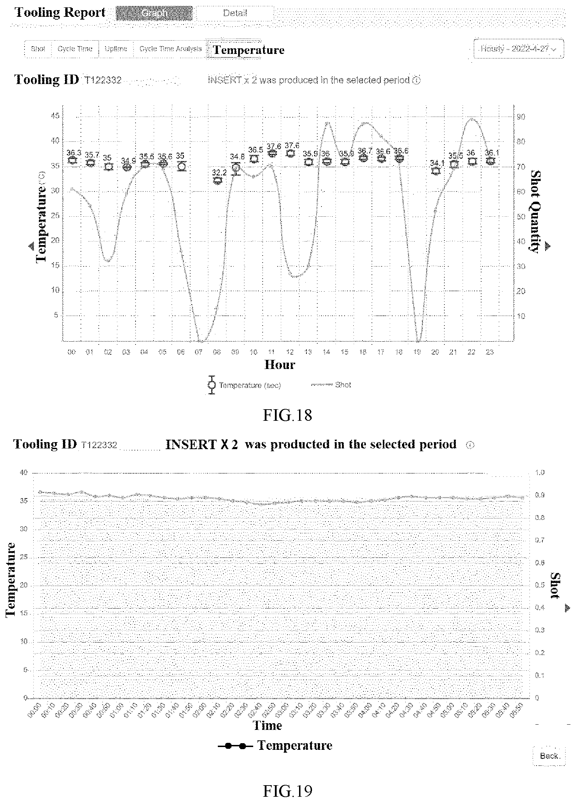

FIG. 18 shows measured temperature data, shows maximum and minimum temperature using error bars, visually shows deviations, and displays an average temperature value.

FIG. 18 shows a function of analyzing mold temperature of data collected through a sensor module and stored in a management server, server, or cloud server system, and displaying the mold temperature in an App platform on a monitor.

FIG. 19 may include a step of showing an image in which entire temperature data measured in a specific time range is displayed when a temperature value of the specific time range is clicked in FIG. 18.

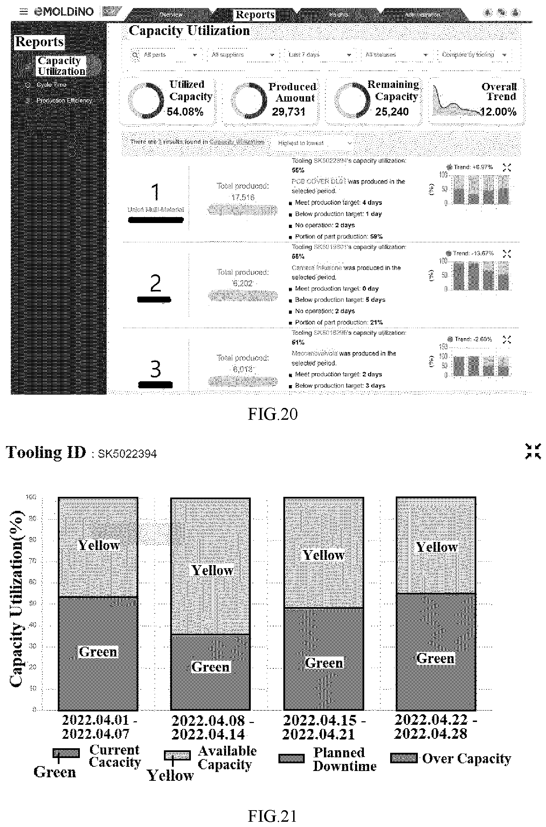

FIG. 20 shows a current use state of molds for various parts that a corresponding company has.

The present disclosure include a step of showing how much production has been actually progressed using a mold with respect to the available time (an available process time at a production site, which is input by a user) of each mold.

Production performed actually using a mold is calculated as operation of a sensing set.

Analysis of a use amount of each mold is shown below, days on which a target production amount was satisfied and was not satisfied, and days on which a corresponding mold was not operated (not used) are analyzed and shows on the basis of the current, and the overall production rate is shown.

A production amount is analyzed on the basis of time.

In FIG. 20, the graph at the right side of the analysis part of each mold shows use time analysis of recent production through bar graphs.

In FIG. 20, green shows the time for which products were actually produced using a mold and yellow shows the time for which additional production of products were possible other than the actual product production time. Further, a planned downtime and an excessive production period are also shown.

The bar graphs of FIG. 21 show times for which products ware produced during four weeks from April 1 to April 28 in the unit of week.

In FIG. 21, green of four bar graphs shows time for which products were actually produced using a mold and yellow shows time for which additional production of products was possible other than the actual product production time.

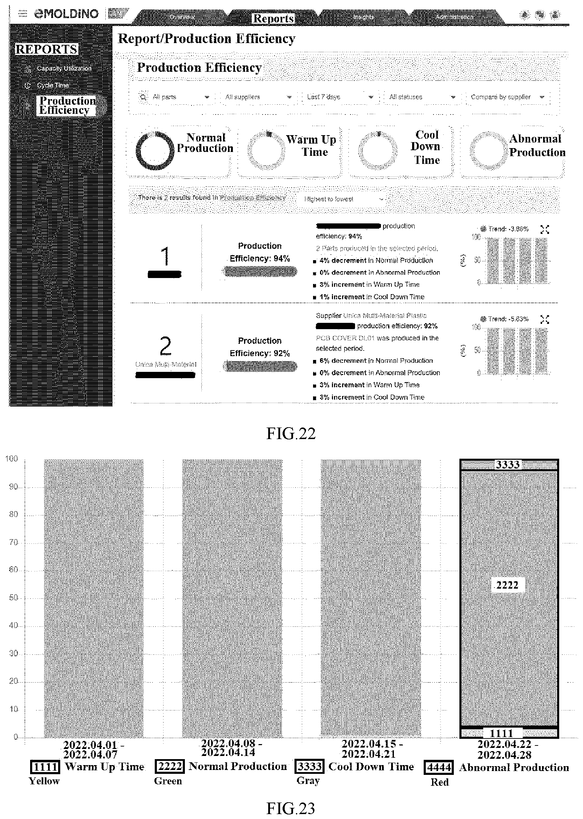

FIG. 22 is one example showing product production efficiency and the upper part of the image shows the distribution ratios of a normal production period, a warm-up period, a cool-down period, and an abnormal production period of molds that a corresponding company has.

The lower part of the image in FIG. 22 shows production efficiency of each mold, and in this part, how much the current production efficiency was improved with respect to the past is shown.

In FIG. 22, the graph at the right side of the analysis part of each mold shows bar graphs about a normal production period, a warm-up period, a cool-down period, and an abnormal production period in recent production.

FIG. 22 of the present disclosure may include s step showing the distribution ratios of a normal production period, a warm-up period, a cool-down period, and an abnormal production period when products are produced through molds that a corresponding company has, and the improvement ratio of the current production efficiency to the past in an image.

In FIG. 22, green shows normal production, yellow shows a warm-up period, and a cool-down period is shown by gray. An abnormal production is shown by red.

When clicking a radial arrow at the upper end of the graph, it is possible to see an enlarged bar graph. An analysis progress period is shown on an X-axis in cycle time analysis of the enlarged bar graph.

The bar graphs of FIG. 23 show four weeks from April 1 to April 28 in the unit of week. In FIG. 23, green of fourth bar graphs shows normal production, yellow shows a warm-up period, and gray shows a cool-down period. Abnormal production is shown by red.

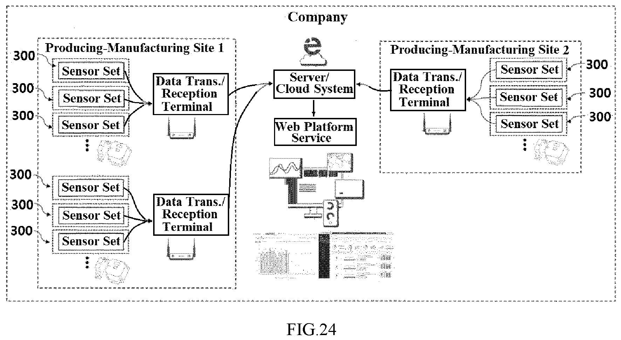

FIG. 24 a flowchart schematically showing a process in which data and analysis information collected from an App platform are displayed from data collection using a sensing set.

Briefly describing FIG. 24, a plurality of sensing sets is attached and installed on a mold to manage various molded products that are produced in countries of the world, data is transmitted to a transmission/reception terminal through a controlling PCB for signals measured by the sensing sets, and the transmitted data is transmitted to a management server, server, or cloud server system through wired/wireless communication such as high-speed internet WiFi and stored in a memory and/or a database.

The data stored in the memory and/or the database is analyzed in various ways through a statistical algorithm and an AI/ML algorithm mounted on the management server, server, or cloud server system, whereby various services are provided to users such that they can efficiently monitor and manage products.

The matters described above and the matters to be described below on the basis of drawings can be easily implemented by those skilled in the art.

A mathematical statistic tool/algorithm and/or an AI/ML algorithm are mounted on the server or cloud server system so that it is possible to a cycle time, temperature of a mold, and/or a vibration signal measured during a molding process using the stored data.

The present disclosure includes a step of analyzing and determining molded products as good products produced through a normal process or as poor products produced through an abnormal process using the data recorded and stored in a memory and/or a database of a corresponding server on the basis of learned data patterns through the mathematical statistic tool/algorithm and/or the AI/ML algorithm mounted on the server.

It is possible to check this analysis data on a monitor at anywhere in the world remotely through a management server, a server, a cloud server, or the like equipped with an App platform program designed and made in accordance with the present disclosure, and since this analysis data shows data in real time, so it is possible to use the analysis data for timely and accurate production management and process control.

The present disclosure may include a step of displaying the result of analyzing an acceleration signal of the data, which is collected through the sensor module and stored in a management server, server, or cloud server system, using an analysis algorithm on an App platform in various ways about the quality of molded products.

The present disclosure includes a step of converting time-series data into specific peak and time data on the basis of an algorithm stored in a firmware program of a sensor module, and then arraying, and transmitting and storing the data into a management server, server, or cloud server system through a data transmission/reception terminal, and analyzing and displaying the data the image of an App platform.

The present disclosure includes a step of recording a magnitude value and time of the points in time of mold-closing, start of injection, start of packing (switch of packing), end of packing, and mold-opening for peak values of vibration signals of a mold, and it is possible to find out the time information and process variation of a mold-closing step, an injection step, a packing step, a cooling step, and a mold-opening step on the basis of them.

It is possible to check an injection time, a packing time, a cooling time, and a cycle time of each process step by analyzing a vibration signal measured by an acceleration sensor disposed in a sensor module, and the present disclosure may include a step of displaying the result of analyzing the data through an analysis algorithm mounted on a memory in an image in a report type.

The present disclosure may include a step of determining whether products ware produced in a normal molding process and showing the result in an image on a monitor by measuring the number of times of shots by measuring the number of times of mold-closing and/or mold-opening, and by measuring and analyzing the interval between the mold-closing and the mold-opening.

For the acceleration sensor disposed in the sensor module, it is possible to use all of the time intervals of mold-closing, start of injection, start of packing (switch of packing), end of packing, and mold-opening and the peak values of vibration signals in order to check whether molded products were produced in an normal process.

Accordingly, an embodiment of the present disclosure may include a step of measuring the magnitude of the amplitude of a vibration signal and/or the interval between signals of at least one or more of mold-closing, start of injection, start of packing (switch of packing), end of packing, and mold-opening measured by an acceleration sensor, of determining whether the magnitude and/or the interval depart from a predetermined set value, of managing the process of molded products, and of displaying or notifying of the result in an image.

The flow until manufacturing-producing information is collected by a sensor module and displayed on an App platform by applying the method described above is as in FIG. 21, and, through the configuration of the present disclosure, there are provided service method and system that monitor and manage manufacturing-producing information in real time through online without limitation in place or distance beyond the manufacturing-producing management of a conventional type that was performed manually by workers in the related art.

In FIG. 20 and FIG. 22 of the specification of the present disclosure, hiding characters by drawing horizontal black lines means deletion for preventing information of a company, a part, etc. from being published.

It is possible to design and display various images on the basis of stored data even though the images are not described in the specification of the present disclosure or are not shown in the drawings.

The protective range of the injection-molded product quality management service method of the present disclosure is briefly described on the basis of the above description.

An embodiment of the present disclosure includes: a step of downloading a predetermined program provided from an App to connecting with a server and receiving a service; a step of clicking an information input button provided by the App and then inputting and storing information for receiving a service, which includes a mold, a product, and a company name linked with a plurality of sensing sets installed on a corresponding mold, in a memory or a database; a step of transmitting signals measured by a plurality of input and stored sensing sets to a controlling PCB disposed in a sensor module; a step of preprocessing data through an algorithm mounted on the controlling PCB; and a step of transmitting the preprocessed data to a transmission/reception terminal in which the transmitted data is stored in a server through communication including internet WiFi.

As another embodiment of the present disclosure, the method includes a step of mounting a firmware program for operating an MCU and a sensing set on the controlling PCB disposed in the sensor module, of editing data measured by a sensor of the measuring PCB into one time-series data array through the firmware algorithm to increase the processing speed of the data and reduce the storage capacity, and of transmitting and receiving the data from the controlling PCB to the transmission/reception terminal through wireless communication including Bluetooth.

As another embodiment of the present disclosure, the method includes: a step of storing the data transmitted to the transmission/reception terminal from the controller of the sensing module into the memory or the database of the server; a step of determining a normal product when data of stored temperature data is in a normal production period and a stable pattern that is a set temperature range; and a step of determining an abnormal product and displaying a display or notification message in an image when the temperature of the mold changes and departs from the stable pattern that is a set temperature range.

As another embodiment of the present disclosure, the method includes: a step of recording and storing data measured from the sensor module into the server through the transmission/reception terminal; and a step of mounting a statistical algorithm and an AI/ML algorithm, analyzing the quality of molded products on the basis of the data stored in the server and showing an analysis image on the basis of at least one or more piece of information of a mold ID, a part ID, a sensing set ID, each molded product, a hall sensor, a temperature sensor, and an acceleration sensor so that an individual or a company can mange products that are produced by the mold.

As another embodiment of the present disclosure, the method includes: step of measuring a vibration signal measured by the acceleration sensor as time-series data by means of the measuring PCB; a step of extracting and putting only peak values for production information analysis into a data array for the measured data by applying a corresponding algorithm in an MCU disposed in the controlling PCB and a memory equipped with a control algorithm; a step of transmitting the arrayed data to the transmission/reception terminal through Bluetooth communication of the controlling PCB and storing the arrayed data into at least one of a management server, a server, and a cloud server; and a step of displaying molded products departing from a set range as poor products or showing a guide in an image by analyzing a generation interval of vibration signals that are generated in mold-opening and mold-closing on the basis of the data stored in the sever in order to manage products.

As another embodiment of the present disclosure, the method includes: step of measuring a vibration signal measured by the acceleration sensor as time-series data by means of the measuring PCB; a step of extracting and putting only peak values for production information analysis into a data array for the measured data by applying a corresponding algorithm in an MCU disposed in the controlling PCB and a memory equipped with a control algorithm; a step of transmitting the arrayed data to the transmission/reception terminal through Bluetooth communication of the controlling PCB and storing the arrayed data into at least one of a management server, a server, and a cloud server; and a step of displaying molded products departing from at least one or more set ranges as poor products or showing a guide in an image by analyzing at least one or more of a generation interval and an amplitude magnitude of vibration signals, which are generated at start of injection, start of packing, and end of packing, on the basis of the data stored in the sever.

As another embodiment of the present disclosure, the method includes a step of showing the distribution ratios of a normal production period, a warm-up period, a cool-down period, and an abnormal production period in product production and an improvement ratio of current production efficiency to the past for molds of a corresponding company that is provided with a service to efficiently perform production management by comparing the current production efficiency with the past.

As another embodiment of the present disclosure, the method includes: a step of showing use amount analysis for each of molds of a corresponding company, of performing analysis on the basis of days on which a target production amount was satisfied and was not satisfied and days on which a corresponding mold was not operated, and of displaying an entire production ratio; and a step of providing an image in which a graph at the right side of the image shows a use time bar graph for production in analysis of each of the molds, green shows time for which products were actually produced using a mold, and yellow shows time for which additional production of products was possible other than the actual product production time.

As another embodiment of the present disclosure, the method includes: a step of displaying a part ID that is produced by a corresponding company of a plurality of service target companies or individuals, the name of the part, a current production state, etc. in an image; and a step of displaying an image through which it is possible to check production information of a corresponding part when the part ID is clicked.

As another embodiment of the present disclosure, the method includes: a step of displaying a mold ID that produces a plurality of parts of a corresponding company of a plurality of service target companies or individuals, and a current production state of the molds in an image; and a step of displaying an image through which it is possible to check production information of a corresponding part that is produced by the mold when the mold ID is clicked.

As another embodiment of the present disclosure, the method includes a step of displaying an image in which it is possible to check an analysis report about the number of shots, a cycle time, an uptime, a vibration signal, and temperature for a corresponding mold and it is possible to search for and check all of data for each month, each week, each day, and each time.

As another embodiment of the present disclosure, the method includes a step of receiving raw data measured by the hall sensor, the temperature sensor, and the acceleration sensor disposed in the sensor module, as it is, in an array type, and putting all of product production cycle times in a set cycle into data (256 bytes) of 1 packet in order of time by applying an operating algorithm of a control program mounted on the controlling PCB in consideration of efficiency in storing and transmitting data.

As another embodiment of the present disclosure, the method includes a step of classifying data to be stored in the management server, server, or cloud server system into two types in a broad meaning, and of storing data measured by the sensor module without processing, or a step of reprocessing and storing collected information, if necessary.

As another embodiment of the present disclosure, the method includes: a step of downloading a predetermined program provided by an App platform and joining as a member in accordance with a predetermined procedure provided by the program; and a step of receiving a unique ID for using a service in joining and being able to check the production amount of a corresponding product of a corresponding company and whether production is normally performed through various monitoring images by accessing an injection-molded product quality management service App using the given unique ID.

As another embodiment of the present disclosure, the method includes: a step of changing and setting a period for measuring temperature of the mold and a vibration signal of the mold through the MCU and the memory equipped with a firmware program on the basis of the data measured by a sensor disposed in the sensor module; and a step of changing and setting a signal measurement period set in the firmware program in consideration of the number of sensor modules, the number of service target companies, a data storage capacity, and a processing speed of a data amount.

As another embodiment of the present disclosure, the method includes a step of analyzing, determining, and displaying molded products as good products produced through a normal process or as poor products produced through an abnormal process in an image using the data recorded and stored in a memory and a database of a corresponding server for parts or products on the basis of learned data patterns through the mathematical statistic tool/algorithm and/or the AI/ML algorithm mounted on the server for corresponding parts or products.

The protective range of the injection-molded product quality management service system of the present disclosure is briefly described on the basis of the above description.

Another embodiment of the present disclosure provides an injection-molded product quality management service system including: a sensing set that has, therein, a controlling PCB having a magnet unit, a hall sensor, a liquid crystal display, and MCU, and a memory and equipped with a control program, and a measuring PCB having a temperature sensor and an acceleration sensor fixedly installed thereon and measuring a signal generated by a mold; a transmission/reception terminal that receives data measured by the sensing set and transmitted through Bluetooth communication installed on the controlling PCB of the sensor module; and a server or a cloud server that stores data received from the transmission/reception terminal and analyzes, determines, and displays molded products as good product produced through a normal process or as poor products produced through an abnormal process in an image on the basis of the stored data using a mathematical statistic tool/algorithm and/or an AI/ML algorithm mounted on the server or the cloud server.

In an embodiment of the present disclosure, in order to obtain accurate and reliable data from a sensor disposed in the sensor module, the controlling PCB on which the hall sensor is fixedly installed in consideration of the position of a magnet is fixedly installed at an upper portion in a sensor module case, the temperature sensor measuring temperature and the acceleration sensor measuring a vibration signal are fixedly installed on the measuring PCB and fixedly installed on a sensor module bottom case, and the sensor module bottom case is fixedly installed on a mold surface.

According to another embodiment of the present disclosure, since the magnitude of the magnetism of a magnet installed in a magnet unit decreases in inverse proportion to the cube of a distance, the magnet unit and a sensor module having a hall sensor disposed therein are fixedly installed within a set distance, it is disposed on a controlling PCB and fixedly installed at an upper portion in the sensor module, and a magnet installed in the magnet unit is fixedly installed at an upper portion of the magnet unit at a predetermined distance from a mold surface due to a property that magnetic flux density decreases at high temperature.

As another embodiment of the present disclosure, a battery disposed in the sensor module is fixedly installed on a battery-fixing member installed under the battery, a silicon member for fixing the battery is installed over the battery such that the battery is not separated from the battery-fixing member, and an insulating plate is installed under the battery-fixing member to prevent a use temperature limit of the battery from being exceeded by minimizing heat transferring to the battery.

According to the injection-molded product quality management service system according to the present disclosure, those skilled in the art can secure rights by describing claims in various ways from the above description.

### [Industrial Applicability]

The present disclosure provides a method for a service of monitoring and analyzing a manufacturing-producing process, the method measuring mold temperature, the number of shots, a cycle time, and an acceleration signal of the manufacturing-producing process by installing a mold count, a shot count, an IoT sensing set, or an edge sensing set on a mold, and the method providing process information of manufacturing and producing to an online platform without limitation in the position of a mold and the position and distance of a manager by storing and analyzing measured data in a server/cloud server in real time, and a system for providing the service, whereby it is possible to produce good products. Accordingly, the industrial applicability is very high.

### [Description of Reference Numerals]

71 : magnet unit 72 : sensor module
100 : sensing module 101 : sensor module top case
102 : button for operating sensor module
103 : cover of liquid crystal display for displaying sensor module information
104 : silicon cover of button for operating sensor module
105 : PCB for controlling sensor module
106 : silicon member for fixing sensor module battery
107 : sensor module battery 108 : battery-fixing member
109 : PCB for measuring sensor module 110 : insulating plate
111 : button for checking installation of sensor module 112 : cover of button for checking installation of sensor module
113 : sensor module bottom case 114 : button for operating sensor module
115 : liquid crystal display for displaying sensor module information
116 : operating process (MCU) of controlling PCB
117 : hall sensor 118 : acceleration sensor
119 : temperature sensor 120 : button for checking installation of sensor module
150 : sensing device 200 : magnet unit
201 : magnet unit body 202 : magnet unit cover
203 : magnet 204 : magnet accommodation groove
300 : mold
400 : mold temperature measured by contact-type temperature measurer
500 : mold temperature measured by sensing device
600 : data transmission/reception terminal
700 : server/cloud server
801 : non-producing period based on mold temperature analysis
802 : preheating period based on mold temperature
803 : producing period based on mold temperature
804 : cooling period based on mold temperature
805 : good product-possible period of producing period
806 : period with possibility of defect or problem of producing period

## Claims

1. - Injection-molded product quality management service method that can analyze and monitor a molded product production process using a sensing device, the method comprising:
downloading a predetermined program provided from an App to connecting with a server and receiving a service;
clicking an information input button provided by the App and then inputting and storing information for receiving a service, which includes a mold, a product, and a company name linked with a plurality of sensing sets installed on a corresponding mold, in a memory or a database;
transmitting signals measured by a plurality of input and stored sensing sets to a controlling PCB disposed in a sensor module;
preprocessing data through an algorithm mounted on the controlling PCB; and
transmitting the preprocessed data to a transmission/reception terminal in which the transmitted data is stored in a server through communication including internet WiFi.

2. The method of claim 1, wherein mounting a firmware program for operating an MCU and a sensing set on the controlling PCB disposed in the sensor module, of editing data measured by a sensor of the measuring PCB into one time-series data array through the firmware algorithm to increase the processing speed of the data and reduce the storage capacity, and transmitting and receiving the data from the controlling PCB to the transmission/reception terminal through wireless communication including Bluetooth.

3. The method of claim 1 or 2, comprising:
storing the data transmitted to the transmission/reception terminal from the controller of the sensing module into the memory or the database of the server;
determining a normal product when data of stored temperature data is in a normal production period and a stable pattern that is a set temperature range; and
determining an abnormal product and displaying a display or a notification message in an image when the temperature of the mold changes and departs from the stable pattern that is a set temperature range.

4. The method of claim 1, comprising:
recording and storing data measured from the sensor module into the server through the transmission/reception terminal; and
mounting a statistical algorithm and an AI/ML algorithm, analyzing the quality of molded products on the basis of the data stored in the server and showing an analysis image on the basis of at least one or more piece of information of a mold ID, a part ID, a sensing set ID, each molded product, a hall sensor, a temperature sensor, and an acceleration sensor so that an individual or a company can mange products that are produced by the mold.

5. The method of claim 1, comprising:
measuring a vibration signal measured by an acceleration sensor as time-series data by means of a measuring PCB;
extracting and putting only peak values for production information analysis into a data array for the measured data by applying a corresponding algorithm in an MCU disposed in the controlling PCB and a memory equipped with a control algorithm;
transmitting the arrayed data to the transmission/reception terminal through Bluetooth communication of the controlling PCB and storing the arrayed data into at least one of a management server, a server, and a cloud server; and
displaying molded products departing from a set range as poor products or showing a guide in an image by analyzing a generation interval of vibration signals that are generated in mold-opening and mold-closing on the basis of the data stored in the sever in order to manage products.

6. The method of claim 1, comprising:
measuring a vibration signal measured by an acceleration sensor as time-series data by means of a measuring PCB;
extracting and putting only peak values for production information analysis into a data array for the measured data by applying a corresponding algorithm in an MCU disposed in the controlling PCB and a memory equipped with a control algorithm;
transmitting the arrayed data to the transmission/reception terminal through Bluetooth communication of the controlling PCB and storing the arrayed data into at least one of a management server, a server, and a cloud server; and
displaying molded products departing from at least one or more set ranges as poor products or showing a guide in an image by analyzing at least one or more of a generation interval and an amplitude magnitude of vibration signals, which are generated at start of injection, start of packing, and end of packing, on the basis of the data stored in the sever.

7. The method of claim 1, comprising showing distribution ratios of a normal production period, a warm-up period, a cool-down period, and an abnormal production period in product production and an improvement ratio of current production efficiency to the past for molds of a corresponding company that is provided with a service to efficiently perform production management by comparing the current production efficiency with the past.

8. The method of claim 1, comprising:
performing use amount analysis for each of molds of a corresponding company, performing analysis on the basis of days on which a target production amount was satisfied and was not satisfied and days on which a corresponding mold was not operated, and displaying an entire production ratio; and
providing an image in which a graph at the right side of the image shows a use time bar graph for production in analysis of each of the molds, green shows time for which products were actually produced using a mold, and yellow shows time for which additional production of products was possible other than actual product production time.

9. The method of claim 1, comprising:
displaying a part ID that is produced by a corresponding company of a plurality of service target companies or individuals, the name of the part, and a current production state in an image; and
displaying an image through which it is possible to check production information of a corresponding part when the part ID is clicked.

10. The method of claim 1, comprising:
displaying a mold ID that produces a plurality of parts of a corresponding company of a plurality of service target companies or individuals, and a current production state of the molds in an image; and
displaying an image through which it is possible to check production information of a corresponding part that is produced by the mold when the mold ID is clicked.

11. The method of claim 10, comprising displaying an image in which it is possible to check an analysis report about the number of shots, a cycle time, an uptime, a vibration signal, and temperature for a corresponding mold and it is possible to search for and check all of data for each month, each week, each day, and each time.

12. The method of claim 1, comprising receiving raw data measured by a hall sensor, a temperature sensor, and an acceleration sensor disposed in the sensor module, as it is, in time series, and putting all of product production cycle times in a set cycle into data of 1 packet in order of time by applying an operating algorithm of a control program mounted on the controlling PCB in consideration of efficiency in storing and transmitting data.

13. The method of claim 1, comprising:
classifying data to be stored in the management server, server, or cloud server system into two types in a broad meaning, and storing data measured by the sensor module without processing; or
reprocessing and storing collected information, if necessary.

14. The method of claim 1, comprising:
downloading a predetermined program provided by an App platform and joining as a member in accordance with a predetermined procedure provided by the program; and
receiving a unique ID for using a service in joining and being able to check a production amount of a corresponding product of a corresponding company and whether production is normally performed through various monitoring images by accessing an injection-molded product quality management service App using the given unique ID.

15. The method of claim 1, comprising:
changing and setting a period for measuring temperature of the mold and a vibration signal of the mold through an MCU and a memory equipped with a firmware program on the basis of data measured by a sensor disposed in the sensor module; and
changing and setting a signal measurement period set in the firmware program in consideration of the number of sensor modules, the number of service target companies, a data storage capacity, and a processing speed of a data amount.

16. The method of claim 1, comprising analyzing, determining, and displaying molded products as good products produced through a normal process or as poor products produced through an abnormal process in an image using data recorded and stored in a memory and a database of a corresponding server for parts or products on the basis of learned data patterns through a mathematical statistic tool/algorithm and/or an AI/ML algorithm mounted on the server for corresponding parts or products.

17. An injection-molded product quality management service system comprising:
a sensing set that has, therein, a controlling PCB having a magnet unit, a hall sensor, a liquid crystal display, and MCU, and a memory and equipped with a control program, and a measuring PCB having a temperature sensor and an acceleration sensor fixedly installed thereon and measuring a signal generated by a mold;
a transmission/reception terminal that receives data measured by the sensing set and transmitted through Bluetooth communication installed on the controlling PCB of the sensor module; and
a server or a cloud server that stores data received from the transmission/reception terminal and analyzes, determines, and displays molded products as good product produced through a normal process or as poor products produced through an abnormal process in an image on the basis of the stored data using at least one or more of a mathematical statistic tool, a statistic algorithm, and an AI/ML algorithm mounted on the server or the cloud server.

18. The system of claim 17, wherein, in order to obtain accurate and reliable data from a sensor disposed in the sensor module, the controlling PCB on which the hall sensor is fixedly installed in consideration of the position of a magnet is fixedly installed at an upper portion in a sensor module case;
the temperature sensor measuring temperature and the acceleration sensor measuring a vibration signal are fixedly installed on the measuring PCB and fixedly installed on a sensor module bottom case; and
the sensor module bottom case is fixedly installed on a mold surface.

19. The system of claim 17 or 18, wherein since the magnitude of the magnetism of a magnet installed in a magnet unit decreases in inverse proportion to the cube of a distance, the magnet unit and a sensor module having a hall sensor disposed therein are fixedly installed within a set distance;
a controlling PCB is fixedly installed at an upper portion in the sensor module; and
a magnet installed in the magnet unit is fixedly installed at an upper portion of the magnet unit at a predetermined distance from a mold surface due to a property that magnetic flux density decreases at high temperature.

20. The system of claim 17 or 18, wherein a battery disposed in the sensor module is fixedly installed on a battery-fixing member installed under the battery;
a silicon member for fixing the battery is installed over the battery such that the battery is not separated from the battery-fixing member; and
an insulating plate is installed under the battery-fixing member to prevent a use temperature limit of the battery from being exceeded by minimizing heat transferring to the battery.
